# EUROPEAN PATENT SPECIFICATION

(11) **EP 0 795 149 B1**
(45) Date of publication and mention of the grant of the patent: **11.04.2001**
(21) Application number: 95939445.3
(22) Date of filing: 21.11.1995
(51) Int. Cl.: G06F 1/00, G06F 12/14

(54) **IMPROVEMENTS CONCERNING ACCESS RIGHTS IN OR TO DATA BASES**
VERBESSERUNGEN AN ZUGANGSRECHTEN FÜR ODER ZU DATEIEN
AMELIORATIONS RELATIVES AUX DROITS D'ACCES A OU DANS DES BASES DE DONNEES

(30) Priority: 29.11.1994 SE 9404155
(43) Date of publication of application: 17.09.1997
(73) Proprietor: TELIA AB, 123 86 Farsta (SE)
(72) Inventor: BIGGE, Peter, S-114 54 Stockholm (SE)
(74) Representative: Akerman, Marten Lennart
(86) International application number: SE9501383
(87) International publication number: WO9617284

(56) References cited:
- EP-A- 0 447 339
- US-A- 4 956 769
- US-A- 5 347 578
- IEEE COMPUTER SOCIETY SYMPOSIUM ON RESEARCH IN..., May 1990, (OAKLAND, CALIFORNIA), ROBERT W. BALDWIN, "Naming and Grouping Privileges to Simplify Security Magnagement in Large Databases", pages 116-132.
- IBM TECHNICAL DISCLOSURE BULLETIN, Volume 32, No. 10A, March 1990, "Reference Monitor", page 310 - page 311, page 318 - page 319, pages 335, 356 - 357, pages 400, 444 - 445.

## Description

The present invention relates to an improved procedure for administering and controlling access to a data base, data bases using said procedure and computer networks on which such databases may be operated.

A prior art document is found in Robert W. Baldwin, "Naming and Grouping Privileges to Simplify Security Management in Large Databases", Proceedings of the IEEE Computer Society Symposium on Research in Security and Privacy, May 1990, Oakland, California, pages 116-132. This paper describes a way to simplify security management by reducing the complexity of the access controls on data base objects, and by providing users with the flexibility to define administrative roles (like Auditor or Security Administrator) that match their requirements for the separation of duties. The key idea is to allow users to group and name privileges to form named protection domains (NPDs). The main conclusion is that the naming and abstraction mechanisms provided by NPDs can simplify security management in much the same way that procedures can simplify programming.

Administration of large data bases with large numbers of users has a number of problems associated with operation of the data base. Consider a data base which:
- uses a single file server as a platform;
- has a large number of users, of the order of 20,000, half of which are simultaneously logged on to the system;
- has a single level of administration security;
- operates various data base procedures each of which may include some functions denied to certain users; and
- contains data on various subjects, having diverse security ratings, some of which may only be available to a subset of data base users.

Users of such a data base will normally have a need to use several data base applications in parallel. Users may have restricted access rights as between different data base subjects, or even within a subject. For example, a given user may be allowed access to telephone number lists for the Stockholm area, but be denied access to data on financial ledgers. Certain telephone numbers may be regarded as secret and access to such numbers may be denied to all except a few users. If there is only a single level of administration available, the system administrator role is the only means by which new identities can be created. Unfortunately, this role is able to access all information on the system, erase portions of the data, or even the entire data base, or even switch off the file server on which the data base is stored. The problem of controlling access to such a data base, without imposing an excessive computational load on a file server and, thereby seriously slowing down its speed of operation, is by no means easy to solve.

In order to achieve this, the access rights of each of some 20,000 users must be broken down:
- by class of subject matter;
- within subject matter classes, by secret data; and
- by data base operation.

During the performance of a given data base task for a given user, different access rights may come into play.

System administration for large systems of this type is complex. For the entire system administration load to fall to be handled by a single central administrator is not realistic. It is therefore necessary to share the system administration load without compromising data base security, or integrity. Furthermore any mechanism which enables a system administrator to manage the user load on large data bases has obvious advantages.

If effective data base security is to be preserved, it is vital that all data base access rules be held on the file server. If such rules were held on client controlled equipment they could be subverted by a dishonest client. In addition it is necessary to ensure that when a users access rights have been compromised, for example his computer identity and password have fallen into the hands of an unauthorised person, that corrective action is taken promptly.

It has been proposed that management of client identities and access rights be controlled in front of the file server. Such front-end based systems establish a number of parallel connections in relation to general identity. This creates overhead problems, performance problems and log-in problems for the file server.

Where a data base can be accessed by a small number of users only, from ten to a few hundred, a number of small fixed groups of users may be established and identities associated with these groups. This solution is not viable where large numbers of users are involved.

The present invention alleviates the problems, outlined above, of system administration and data base security in a large data base with a large number of users. Where a data base has a large number of users, many of which fall into natural client groupings, a unique system administration role can be established for each client, in addition to the central administration role which gives unrestricted access to the entire data base. In this context a client represents a single organisation, or department, which has a number of data base users, needs to access some only of the value sets stored on the data base, and to perform some, only, of the available data base applications. The client administration role has access only to those parts of the data base to which the client group as a whole is permitted access. This role allows a client administrator to control access rights of users belonging to the same client grouping, as well as performing sensitive operations, which might involve loss of data, for the client. The client administrator has no control over his own access rights which are controlled by a central administrator.

By assigning data base users a predetermined time slot in which they can access the data base, a system administrator is able to manage the user load on the data base. In addition such a measure provides an additional layer of security, especially if combined with a mechanism which deletes a users computer identity if an attempt is made to access the data base outside the time slot assigned to that user.

It should be noted that with a data base, of the type to which this invention relates, which is subject to heavy user demands, it may be advantageous to inhibit command mode operation in real time. None-the-less, the present invention may still be applicable to data base systems which can be operated in command mode.

According to a first aspect of the present invention, there is provided a computer network, having a central processing means including a file server on which a data base is stored, a plurality of terminals adapted to communicate with said central processor, said computer network being arranged to serve a plurality of clients, each client comprising a plurality of users, characterised in that there are provided access means for controlling access rights, to the data base, for each user, said access means including first storage means on which are stored a plurality of data base roles, at least two of which are system administration roles, each having different levels of access rights to said data base, a first system administration role giving unrestricted access to said data base, a second system administration role giving restricted access to parts of said data base, first means for enabling a user having access to said first system administration role to create, read, update and delete access rights of any user including a user assigned said first system administration role, second means for enabling a user having access to said second system administration role to create, read, update and delete access rights of any user having access only to those, or fewer, parts of the database to which said second administration role has access.

Preferably said second means is arranged so that it does not enable a user having access to said second administration role to create, read, update, or delete access rights of said second administrator role.

Preferably there are a plurality of second system administration roles, each role relating to a different part of said data base, and there are provided a plurality of second means, each second means enabling a user having access to a given second system administration role to create, read, update and delete access rights of any user having access only to those, or fewer, parts of the database to which said given second administration role has access.

A client system administration role may be assigned to each client.

According to a second aspect of the present invention there is provided a computer network, having a central processing means including a file server on which a data base is stored, a plurality of terminals adapted to communicate with said central processor, characterised in that there are provided access means for controlling access rights, to the data base, for each user, said access rights permitting a given user to access said data base within predetermined temporal periods, said access means including a monitoring means arranged to deny a user access to said data base outside the predetermined temporal period assigned that user.

Preferably said monitoring means is arranged in response to a user attempting to access said data base outside the predetermined temporal period assigned to said user, to signal said user's computer identity to a security means, said security means being adapted, on receipt of said signal, to delete said computer identity from the data base's list of authorised users.

According to a third aspect of the present invention there is provided a data base, stored on a file server, to which a plurality of clients, each client comprising a plurality of users, has access, characterised in that there are defined a plurality of data base roles, at least two of said roles being system administration roles having different levels of access rights to said data base, a first system administration role giving unrestricted access to said data base, a second system administration role giving restricted access to parts of said data base, enabling a user having access to said first system administration role to create, read, update and delete access rights of any user including a user assigned said first system administration role, and enabling a user having access to said second system administration role to create, read, update and delete access rights of any user having access only to those, or fewer, parts of the database to which said second administration role has access.

Preferably said second administration role is not enabled to create, read, update, or delete access rights of said second administration role.

Preferably there are provided a plurality of second system administration roles, each role relating to a different part of said data base, and enabling a user having access to a given second system administration role to create, read, update and delete access rights of any user having access only to those, or fewer, parts of the database to which said given second administration role has access.

A client system administration role may be assigned to each client.

According to a fourth aspect of the present invention there is provided a data base, stored on a file server, characterised in that each user's access rights permit that user to access said data base only within predetermined temporal periods.

Preferably when a user attempts to access said data base outside the predetermined temporal period assigned to said user, said user's computer identity is deleted from the data base's list of authorised users.

According to a fifth aspect of the present invention there is provided in a computer network, having a central processing means including a file server on which a data base is stored, a plurality of terminals adapted to communicate with said central processor, said computer network being arranged to serve a plurality of clients, each client comprising a plurality of users, a method of setting access rights for each of said plurality of users characterised by the following steps:
- defining access rights, to the data base, for each user, by assigning data base roles;
- assigning at least a first user a first system administration role giving unrestricted access to said data base; and
- assigning at least a second user a second system administration role giving restricted access to parts of said data base.

Preferably said second administration role does not permit a user assigned said second administration role to create, read, update, or delete, the access rights of said second administrator role.

Preferably there are a plurality of second system administration roles, each role relating to a different part of said data base, and each permitting a user, having access thereto, to create, read, update and delete access rights for any user having access only to those, or fewer, parts of the database to which said given second administration role has access.

A client system administration role may be assigned to each client.

According to a sixth aspect to the present invention there is provided, in a computer network, having a central processing means including a file server on which a data base is stored, a plurality of terminals adapted to communicate with said central processor, a method of setting access rights for each of said plurality of users characterised by permitting a user to access said data base only within predetermined temporal periods.

Preferably when a user attempts to access said data base outside the predetermined temporal period assigned to said user, said user's computer identity is deleted from the data base's list of authorised users.

Embodiments of the invention will now be described, by way of example, with reference to the accompanying drawings in which:
Figure 1 illustrates the relationship established between user identities, roles and applications in a data base according to the present invention.
Figure 2 illustrates how a defined role determines the access rights of a given user to a given application on a database according to the present invention.
Figure 3 shows a signal chart for an embodiment of the present invention operating on a SQL file server.
Figure 4 illustrates, in diagrammatic form, an example of a platform on which a data base according to the present invention may be run.

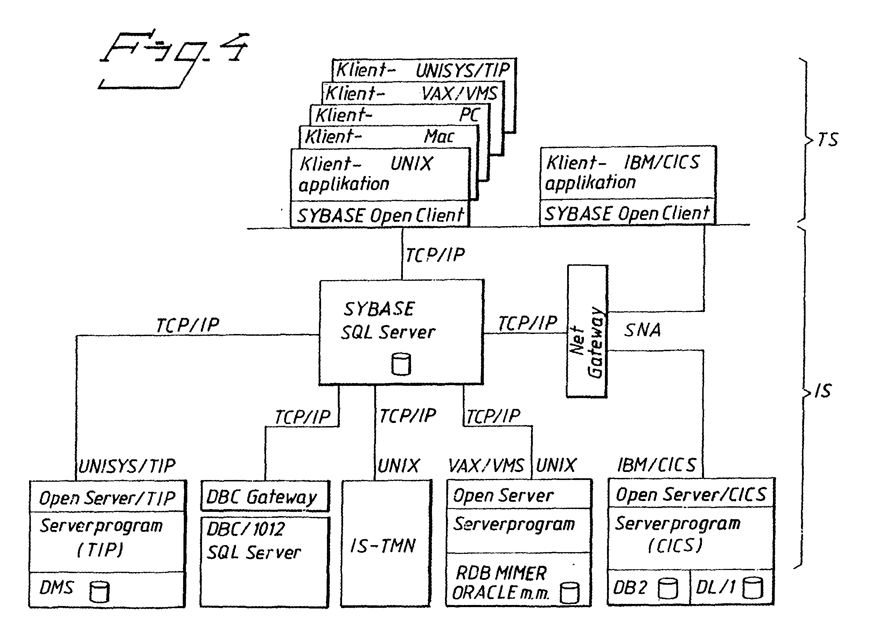

An example of a computer network platform on which the present invention can be realised is illustrated in Figure 4. The operation of such a platform will be immediately apparent, to those skilled in the art, from a brief examination of Figure 4. However, it should be noted that a plurality of terminals using a variety of operating systems, collectively referred to as the application system TS, can be connected to a central file server, the SQL server, by means of Sybase communications software which is herein referred to as Open Client. A variety of systems, referred to as Open Servers, may be used for preparing data base procedures and applications. The Open Servers again communicate with the central server by means of Sybase communications software. The central SQL server carries all the data which comprises the data base, and operates on SQL procedure language. That portion of the computer network which includes the central SQL server and the Open Servers is collectively referred to as the information system, IS. The open servers and applications system may use a variety of operating systems and software, including UNISYS®/TIP®, VAX®/VMS®, PC, MAC, UNIX®, and IBM®/CICS®.

In the operation of a data base, different roles can be identified. In a simple database, there exists two roles, that of system administrator and that of a user who wishes to access data. However, in a very large database, of the type that may be needed to support the operations of a telecommunications network operator, there may be a need for many users to perform data base applications which involve, in addition to reading data, amending data on the data base, deleting data on the database, or creating new data. The operations of creating, reading, updating and deleting data are frequently referred to by their initial letters as CRUD.

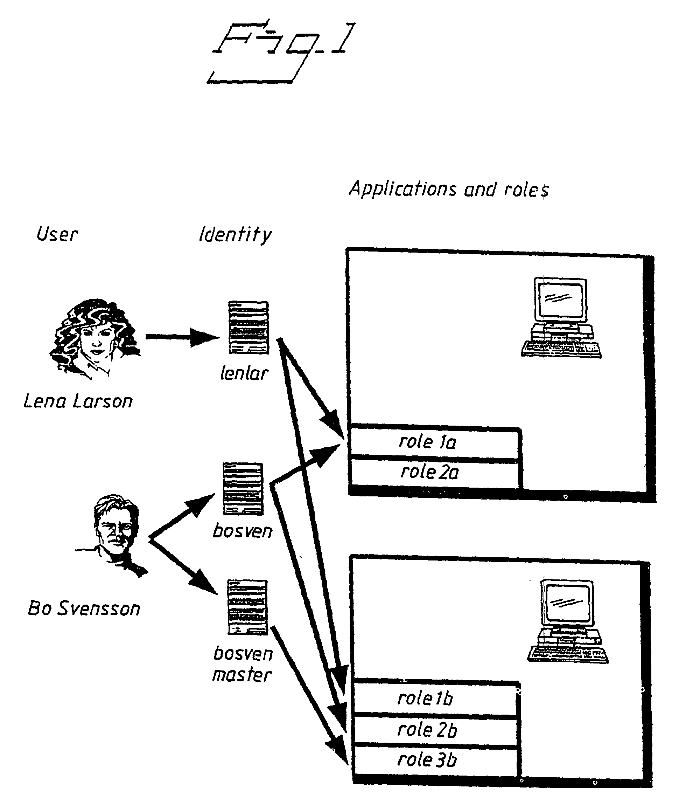

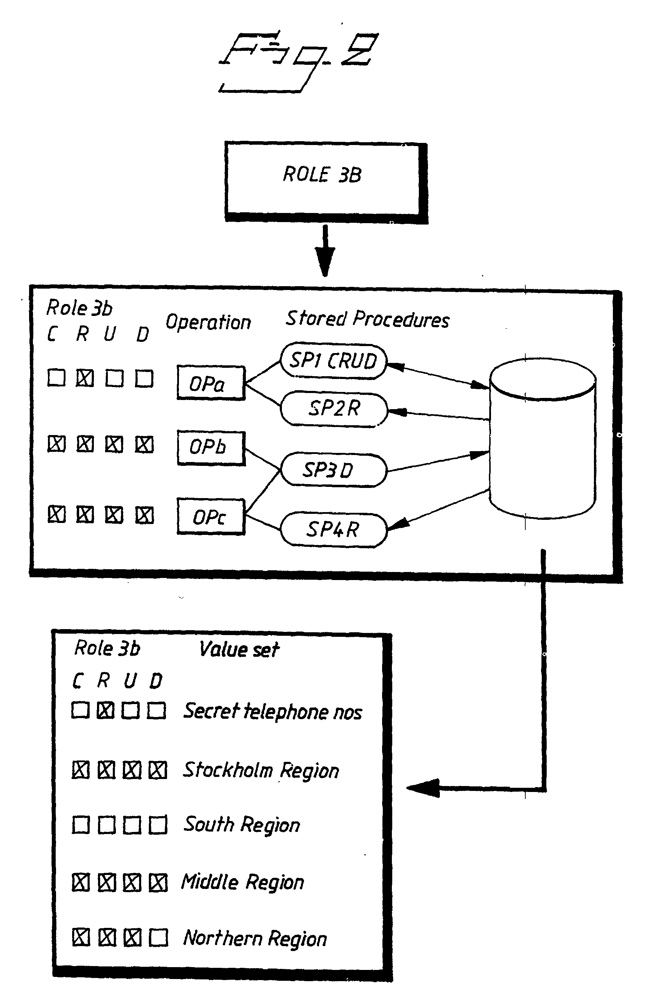

The relationship between a user, a user identity, a role and an application are illustrated in schematic form in Figures 1 and 2. Consider two individual users, of the very large number of total users of the database, perhaps as many as 10,000, called Lena Larson and Bo Svensson. Lena's system identity is "lenlar", and it is unique to her, Bo's computer identity is "bosven" and it is again unique to him. In addition, Bo has a second computer identity, "bosvem-master", which he uses only when accessing certain secret data for which he has special authority to access. For each identity there exists a secret password known only to the user. By entering their computer names and passwords, Bo and Lena get very limited access to the SQL file server.

To obtain the ability to run an application on the SQL file server, a further log-in procedure is performed automatically by the SQL file server. This will be described later. Of the many applications that can be run on the SQL file server, two are referred to, in the drawings, as application A and application B. For each of these applications a number of different roles can be defined, e.g. roles 1, 2 and 3. Performance of a given application may involve a number of separate data base procedures, accessed, for example, via a menu.

Consider role 3B, that is to say role 3 performed in respect of application B. It is assumed that this application involves three operations OPa, OPb, and OPc. These three operations each use a different set of stored procedures SP1 .... SP4. Each of these procedures involves a number of basic data base functions, e.g. SP1 requires the create, read, update and delete functions, while SP3 involves only the delete function. By applying role 3 to application B which operates on data relating to telephone numbers, a series of actions and access rights are defined. For example, role 3B, which is only available to Bo when using the computer identity "bosvem-master", enables secret telephone numbers to be read, but not created, updated, or deleted. By way of contrast, role 3B enables telephone numbers for Northern Region to be created, read and updated, but not deleted.

In use, users, such as Lena and Bo have to be registered on the open file server. This process can only be performed by the system administrator role. In order to register a user, the system administrator enters his/her personal information such as name, organisation, and telephone number, and creates a basic, or computer, identity for the user e.g. lenlar. In addition, the system administrator assigns each user a password, which the user will have to change to a secret password on first logging in to the system. Each computer identity is assigned a run time, or time slot, which indicates the time of day when that user is permitted to use the system. A user is barred by the data base from accessing the data base at any time falling outside the temporal period which has been assigned to that user as run time. Any attempt to access the data base outside the time slot assigned to a user as run time will result in that users computer identity being deleted from the SQL file server and an alarm being flagged to the system administrator. This mechanism provides an additional security layer giving some protection against computer identities and passwords that have been compromised. A users computer identity can always be reestablished in a different form with a new password by the system administrator. In addition by managing the assignment of run times, a system administrator can even out the user load falling on the SQL file server.

To set up access rights for a user, the system administrator has to associate a number of roles with each data base application that the user is allowed to access. As explained above, the roles define precisely what access rights a particularly user has when running a given data base application. A given individual may be assigned more than one computer identity each of which has different roles associated with it. This is advantageous when a single user may need to operate on data having different security classifications and assists in the construction of audit trails.

Access to the data base held on the information system, see Figure 4, is achieved by means of stored procedures. These procedures can create, read, update and/or delete data on the information system. In a given application, a number of operations are defined. An operation is the basic functionality seen by a user. Operations are usually selected from a menu of alternatives, or selected by operation of a specially assigned terminal key. Running a given operation either initiates a dialogue with the IS, or achieves the performance of a task in the IS. Each operation uses at least one stored procedure. These procedures are stored on the open file server. When a role is defined for an application it determines what a user who is assigned that role can do when running that application. If, for example, a user is permitted to open a dialogue with the IS, but only read the contents of stored data, this is indicated by "R", see Figure 2. Thus, for operation OPa, a user assigned role 3B is permitted to run procedures which only entail reading data, i.e. SP2. On the other hand, the user is not permitted to run procedure SP1, because this procedure requires the ability to create, read, update and delete, and role 3B is denied the right to create, update and delete within this application.

A value set is a set of criteria by which data objects are grouped. For example, all telephone subscribers in the Stockholm region represent a value set. When a role is defined, the definition includes the value sets which a user assigned that role is permitted to access, and what basic data base functions that role is permitted in respect of that value set.

In real time operation, the open server must deal with many users and the information has to be protected from unauthorised access yet be available to those who are authorised to use it. The definition of different roles enables users to be given varied access rights, depending on their particular needs. Equally, it is possible to arrange for a hierarchy of system administrators, by defining different system administration roles. In this way it is possible to have a large number of system administrators with only a few having unlimited access rights to the system, the majority having limited rights.

The totality of system users can be divided into client groups, each client representing a department, or external organisation. The use of varied administration roles can, with advantage, be implemented in a client-user hierarchy, by creating a system administrator for each client grouping with access rights limited to the needs of the client. Any changes needed to that clients overall access rights can then be achieved by a variation of the client-administrator's access rights, which must be made by one of the few central administrators. Subsequent changes to the individual user rights of users belonging to that client grouping can be implemented by the client-administrator.

The majority of system administrators thus have limited access rights, and this can be shown by the use of menus, or screen buttons, in which certain menu selections, or buttons, are faded, corresponding to menu operations denied a particular system administrator. The principle reason for showing all menu options, whether available to a particular system administrator, or not, is that it enables a common set of instruction manuals and other literature to be prepared for the system. Such documentation must, of course describe maximum functionality. Of course, it is not only system operations that may be denied to a "junior" system administrator, but also certain value sets. In other words the information that a client based administrator may access can be limited to those value sets which the client is entitled to access.

In the above description of the relationship of identities, users, roles, clients, applications, value sets and system administrators, the emphasis has been on the concepts and functionality of the system, rather than on the physical means by which that functionality is created. In general, in a system of the type described, functionality is created by means of software, i.e computer programs, data base procedures, or the like. It is, of course, possible for functionality to be created by hardware elements, or means, although except in a few cases it is not cost effective to do this. The nature of the inventions described in this specification is such that the inventive concepts reside in the methods and functionality that underlies the software. From the point of view of a practical realisation of the invention it matters little whether a "means" for performing a particular function is a logical entity, created by a computer program, or a physical entity, created by a manufacturing process.

The invention(s) herein described relate to improvements in real products and have a real and significant effect on product performance.

In general, the "means" described in this specification can readily be realised by a skilled computer programmer, familiar with modern programming techniques, from the functional/conceptual description herein provided.

The distinct and practical "real world" advantages of the user-role-application concept described above, together with the concept of a hierarchy of system administrators, are that they enable massive data bases, with large numbers of interactive system users, to be managed in a manner which preserves system integrity and data security. It enables the system to operate at substantially greater speeds and with a substantially reduced processing overhead than is the case with other known systems.

As explained above, an individual user is assigned access rights on the basis of the roles he is permitted to perform in different applications. It would, in theory, be possible to provide each user with a plurality of computer identities and passwords, one for each application he is entitled to use. This is, of course, impractical, especially when considered in relation to control access to different value sets. The present invention overcomes this problem by using a double log-in procedure.

Consider a particular user called Anders Svensson, he has a computer identity, known to himself, called "andsve" and a secret password which only he knows "pende101". There is only a very limited amount of information on the file server that can be accessed, or changed, by the computer identity "andsve" using a general program such as Excel Q+E. However, the double log-in procedure give access to a much wider range of data, on an application-by-application basis. The double log-in procedure automatically generates, within the file server, a plurality of computer identities linked to "andsve", together with associated passwords, one for each application that "andsve" is permitted to access. These user/application identities are not visible to Anders Svensson, and he is not permitted access to them. The only log-in identity and password known to Anders Svensson is "andsve" and "pende101". The log-in procedure can be written in procedure language as:
Login(andsve,pende101)
Exec Fcs_get_password_for_application-identity
logout(andsve)
login (and sve#APPLICATION),
password_for_application-identity
....Normal function calls from client
logout (andsve#APPLICATION)

The application specific identity is composed of the identity known to the user, "andsve", and a code of eight characters for the client separated with a "#", (other separators could of course be used). Fcs_get_password_for_application-identity creates an application specific identity with a randomly generated password. This identity is given rights to perform all necessary functions in dependence on the rights of the user in this particular application.

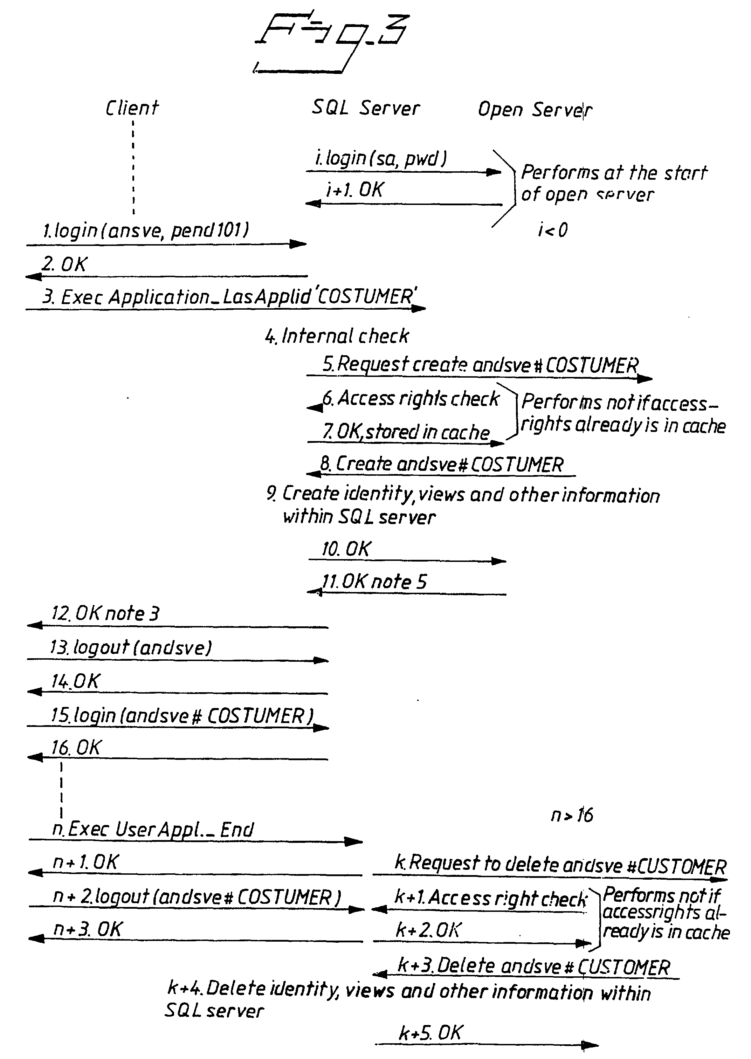

A full signal chart for the operation of the log-in is shown in Figure 3. In the example, illustrated by Figure 3, the basic, or computer identity "andsve", password "pend101", and the application code CUSTOMER are used.. Note that all error handling has been omitted and that only parts of the messages of the log-in and log-out sequences are indicated. Descriptions in italic mean that the system administrator role is used, otherwise "andsve" and "andsve#CUSTOMER" are used. Brief notes on some of the signals shown in the signal chart are set out below. However, for most steps Figure 3 is self explanatory.

Instructions i, i+1, see Figure 3, are executed once at the start of the open server.
3:- Application_LasApplid (?) initiates the creation of an application specific identity. Note that all parameters are not described in the signal chart.
4:- Check that the user is defined for the indicated application, that current time is within the users allocated run time, and that there are no restrictions on the identity, or application, etc.
6, 7:- There is a general code for access control in the open server. A check is performed back into the SQL server which verifies that the user is allowed to call. In order to reduce the access time (from about 0.3 seconds to < lms) the information is then saved in a cache memory in the open server. This cache is cleared out only when a change in the access right is introduced.
8:- The call is made with the system administrator identity, to which the open server has access. There is no possibility of the user discovering this identity and thereby gaining a higher level access than the one for which he is authorised.
9:- The identity is created and information needed to generate views of the value sets are built together with other information in the SQL server.
11:- Again "andsve" is the identity for the signal.
12:- This is the result from the SQL Server of the function called by the client at step 3. The result contains the randomly generated password for andsve#CUSTOMER. It is constituted by 28 characters [32 ....255], which in addition have been DES encrypted with the password for "andsve" as key.

The remaining steps in the signal chart, illustrated in Figure 3, show the identity "andsve" being logged-out, the identity "andsve#CUSTOMER" being logged-in, the execution of the called application, "CUSTOMER", and the log-out of the identity "andsve#CUSTOMER" on completion of the application "CUSTOMER".

It should be noted that the identity "andsve#CUSTOMER" contains information on both the user and the client group to which he belongs. This form of identity is a useful aid in the derivation of audit trails, statistics and debiting etc.. In comparison, prior art systems using front-end log-in control only permit breakdowns using a single common identity, management information can be derived on a user-by-application basis. For example it is possible to enable a user to obtain the answer time of the SQL server for the application he is running.

## Claims

1. A computer network, having a central processing means including a file server on which a data base is stored, a plurality of terminals adapted to communicate with said central processor, said computer network being arranged to serve a plurality of clients, each client comprising a plurality of users, in which network there are provided access means for controlling access rights, to the data base, for each user, said access means including first storage means on which are stored a plurality of data base roles, at least two of which are system administration roles, each having different levels of access rights to said data base, a first system administration role giving unrestricted access to said data base, a second system administration role giving restricted access to parts of said data base, first means for enabling a user having access to said first system administration role to create, read, update and delete access rights of any user including a user assigned said first system administration role, second means for enabling a user having access to said second system administration role to create, read, update and delete access rights of any user having access only to those, or fewer, parts of the database to which said second administration role has access, said second means being arranged so that it does not enable a user having access to said second administration role to create, read, update, or delete access rights of said second administrator role, in which network there are a plurality of second system administration roles, each role relating to a different part of said data base, and in which there are provided a plurality of second means, each second means enabling a user having access to a given second system administration role to create, read, update and delete access rights of any user having access only to those, or fewer, parts of the database to which said given second administration role has access, characterised in that a client system administration role is assigned to each client, and in that second means are provided for each client system administration role arranged to create, read, update and delete access rights of users belonging to a respective client group and further arranged to give no access whatsoever to access rights belonging to other client groups.

2. A computer network according to claim 1, characterised in that there are provided access means for controlling access rights, to the data base, for each user, said access rights permitting a given user to access said data base within predetermined temporal periods, said access means including a monitoring means arranged to deny a user access to said data base outside the predetermined temporal period assigned that user.

3. A computer network as claimed in claim 2, characterised in that said monitoring means is arranged in response to a user attempting to access said data base outside the predetermined temporal period assigned to said user, to signal said user's computer identity to a security means, said security means being adapted, on receipt of said signal, to delete said computer identity from the data base's list of authorised users.

4. A computer network as claimed in claim 3,
characterised in that there are provided alarm means arranged to provide an alarm message for a system administrator, said security means being adapted to activate said alarm means on receipt of a computer user identity signal from said monitoring means.

5. A data base, stored on a file server, to which a plurality of clients, each client comprising a plurality of users, has access, in which data base there are defined a plurality of data base roles, at least two of said roles being system administration roles having different levels of access rights to said data base, a first system administration role giving unrestricted access to said data base, a second system administration role giving restricted access to parts of said data base, first means for enabling a user having access to said first system administration role to create, read, update and delete access rights of any user including a user assigned said first system administration role, and second means for enabling a user having access to said second system administration role to create, read, update and delete access rights of any user having access only to those, or fewer, parts of the database to which said second administration role has access, said second means being arranged so that it does not enable a user having access to said second administration role to create, read, update, or delete access rights of said second administration role, in which data base there are provided a plurality of second system administration roles, each role relating to a different part of said data base, and in which there is provided a plurality of second means, each second means enabling a user having access to a given second system administration role to create, read, update and delete access rights of any user having access only to those, or fewer, parts of the database to which said given second administration role has access, characterised in that a client system administration role is assigned to each client, and in that second means are provided for each client system administration role arranged to create, read, update and delete access rights of users belonging to a respective client group and further arranged to give no access whatsoever to access rights belonging to other client groups.

6. A data base according to claim 5, characterised in that there is provided access means for controlling access rights to the data base for each user, said access rights permit, tina, a given user to access said data base within predetermined temporal periods.

7. A data base as claimed in claim 6, characterised by security means, comprised in said access means, the security means being devised to delete a user's computer identity from the data base's list of authorised users in response to said user attempting to access said data base outside the predetermined temporal period assigned to said user.

8. A data base as claimed in claim 7, characterised by alarm means devised to flag an alarm indication to a system administrator, in response to a user attempting to access said data base outside said predetermined temporal time period allotted to said user.

9. A method for a computer network, having a central processing means including a file server on which a data base is stored, a plurality of terminals adapted to communicate with said central processor, said computer network being arranged to serve a plurality of clients, each client comprising a plurality of users, said method setting access rights for each of said plurality of users and including the following steps:
- defining access rights, to the data base, for each user, by assigning data base roles;
- assigning at least a first user a first system administration role giving unrestricted access to said data base; and
- assigning at least a second user a second system administration role giving restricted access to parts of said data base, wherein
said second administration role does not permit a user assigned said second administration role to create, read, update, or delete, the access rights of said second administrator role, and wherein there are a plurality of second system administration roles, each role relating to a different part of said data base, and each permitting a user, having access thereto, to create, read, update and delete access rights for any user having access only to those, or fewer, parts of the database to which said given second administration role has access, characterised in that a client system administration role is assigned to each client, and in that each client system administration role permits a user assigned that role to create, read, update and delete access rights of users belonging to a respective client group but does not permit said user to create, read, update and delete access rights belonging to other client groups.

10. Method according to claim 9, characterised by permitting a user to access said data base only within predetermined temporal periods.

11. A method as claimed in claim 10, characterised in that when a user attempts to access said data base outside the predetermined temporal period assigned to said user, said user's computer identity is deleted from the data base's list of authorised users.

12. A method as claimed in claim 11, characterised in that an alarm indication, accessible by a system administrator, is provided whenever a user attempts to access said data base outside said predetermined temporal time period allotted to said user.

## Patentansprüche

1. Computernetzwerk mit einem zentralen Verarbeitungsmittel einschließlich eines File-Servers, auf dem eine Datenbank gespeichert ist, einer Anzahl von Terminals, die zur Kommunikation mit dem Zentralprozessor angepaßt sind, wobei das Computernetzwerk aufgebaut ist, um einer Anzahl von Klienten zu dienen, wobei jeder Klient eine Anzahl von Benutzern umfaßt, wobei in dem Netzwerk Zugriffsmittel zum Steuern von Zugriffsrechten zu der Datenbank für jeden Benutzer vorgesehen sind, wobei die Zugriffsmittel ein erstes Speichermittel aufweisen, auf dem eine Anzahl von Datenbankrollen gespeichert sind, von denen zumindest zwei Systemverwaltungsrollen sind mit jeweils unterschiedlichen Ebenen von Zugriffsrechten zu der Datenbank, wobei eine erste Systemverwaltungsrolle unbeschränkten Zugang zu der Datenbank gibt, eine zweite Systemverwaltungsrolle beschränkten Zugriff auf Teile der Datenbank gibt, einem ersten Mittel zum Freigeben eines Nutzers, der Zugriff auf die erste Systemverwaltungsrolle hat, zum Erzeugen, Lesen, Aktualisieren und Löschen von Zugriffsrechten für jeden anderen Nutzer einschließlich eines Nutzers, dem die erste Systemverwaltungsrolle zugewiesen ist, einem zweiten Mittel zum Freigeben eines Nutzers, der Zugriff auf die zweite Systemverwaltungsrolle hat, zum Erzeugen, Lesen, Aktualisieren und Löschen von Zugriffsrechten jedes anderen Nutzers, der nur Zugriff auf solche oder weniger Teile der Datenbank hat, auf die die zweite Verwaltungsrolle Zugriff hat, wobei das zweite Mittel so angeordnet ist, daß es nicht einen Nutzer freigibt, der Zugriff auf die zweite Verwaltungsrolle hat, zum Erzeugen, Lesen, Aktualisieren oder Löschen von Zugriffsrechten der zweiten Verwaltungsrolle, wobei in dem Netzwerk eine Anzahl von zweiten Systemverwaltungsrollen vorhanden sind, wobei jede Rolle sich auf einen unterschiedlichen Teil der Datenbank bezieht und wobei eine Anzahl von zweiten Mitteln vorhanden sind, wobei jedes zweite Mittel einen Nutzer freigibt, der Zugriff auf eine gegebene Systemverwaltungsrolle hat, zum Erzeugen, Lesen, Aktualisieren und Löschen von Zugriffsrechten für jeden Nutzer mit Zugriff nur auf solche oder weniger Teile der Datenbank, auf die die gegebene zweite Verwaltungsrolle Zugriff hat, dadurch **gekennzeichnet**, daß eine Klientensystemverwaltungsrolle jedem Klienten zugewiesen ist und daß zweite Mittel für jede Klientensystemverwaltungsrolle vorgesehen sind zum Erzeugen, Lesen, Aktualisieren und Löschen von Zugriffsrechten für Nutzer, die zu einer jeweiligen Klientengruppe gehören, und ferner zum Ermöglichen keines Zugriffs zu Zugriffsrechten, die zu anderen Klientengruppen gehören.

2. Computernetzwerk nach Anspruch 1, dadurch **gekennzeichnet**, daß Zugriffsmittel zum Steuern von Zugriffsrechten auf die Datenbank für jeden Nutzer vorgesehen sind, wobei die Zugriffsrechte es einem gegebenen Nutzer ermöglichen, auf die Datenbank innerhalb vorgegebener temporärer Zeitspannen zuzugreifen, wobei die Zugriffsmittel ein Überwachungsmittel aufweisen, das aufgebaut ist, um einen Nutzerzugriff auf die Datenbank außerhalb der vorgegebenen temporären Zeitspanne, die dem Nutzer zugewiesen ist, zu verweigern.

3. Computernetzwerk nach Anspruch 2, dadurch **gekennzeichnet,** daß das Überwachungsmittel aufgebaut ist, um in Antwort auf einen Nutzer, der den Versuch unternimmt, die Datenbank außerhalb der vorgegebenen temporären Zeitspanne, die dem Nutzer zugewiesen ist, auf die Datenbank zuzugreifen, die Computeridentität des Nutzers an ein Sicherheitsmittel zu signalisieren, wobei das Sicherheitsmittel ausgebildet ist, um, nach Empfang des Signals, die Computeridentität von der Liste der autorisierten Nutzer der Datenbank zu löschen.

4. Computernetzwerk nach Anspruch 3, dadurch **gekennzeichnet**, daß Alarmmittel vorgesehen sind, die eine Alarmnachricht für einen Systemverwalter liefern können, wobei das Sicherheitsmittel ausgebildet ist, um das Alarmmittel bei Empfang eines Computernutzeridentitätssignals von dem Überwachungsmittel zu aktivieren.

5. Datenbank, die auf einem File-Server gespeichert ist, auf die eine Anzahl von Klienten, die jeweils eine Anzahl von Nutzern umfassen, Zugriff haben, wobei in der Datenbank eine Anzahl von Datenbankrollen definiert sind, wobei zumindest zwei der Rollen Systemverwaltungsrollen mit unterschiedlichen Ebenen von Zugriffsrechten auf die Datenbank sind, wobei eine erste Systemverwaltungsrolle unbeschränkten Zugriff auf die Datenbank gibt, eine zweite Systemverwaltungsrolle beschränkten Zugriff auf Teile der Datenbank gibt, erste Mittel zum Freigeben eines Nutzers, der Zugriff auf die erste Systemverwaltungsrolle hat, zum Erzeugen, Lesen, Aktualisieren und Löschen von Zugriffsrechten für jeden Nutzer einschließlich eines Nutzers, der der ersten Systemverwaltungsrolle zugewiesen ist, und zweite Mittel zum Freigeben eines Nutzers, der Zugriff auf die zweite Systemverwaltungsrolle hat, zum Erzeugen, Lesen, Aktualisieren und Löschen von Zugriffsrechten für jeden Nutzer mit Zugriff nur auf solche oder weniger Teile der Datenbank, auf die die zweite Verwaltungsrolle Zugriff hat, wobei das zweite Mittel so angeordnet ist, daß es einen Nutzer mit Zugriff auf die zweite Verwaltungsrolle nicht freigibt, um Zugriffsrechte der zweiten Verwaltungsrolle zu erzeugen, lesen, aktualisieren oder zu löschen, wobei in der Datenbank eine Anzahl von zweiten Systemverwaltungsrollen vorgesehen ist, wobei jede Rolle sich auf einen unterschiedlichen Teil der Datenbank bezieht, und wobei eine Anzahl von zweiten Mitteln vorgesehen ist, wobei jedes zweite Mittel einen Nutzer mit Zugriff auf eine gegebene zweite Systemverwaltungsrolle freigibt, Zugriffsrechte für jeden Nutzer mit Zugriff auf nur diese oder weniger Teile der Datenbank, auf die die gegebene zweite Verwaltungsrolle Zugriff hat, zu erzeugen, lesen, aktualisieren und zu löschen, dadurch **gekennzeichnet**, daß eine Klientensystemverwaltungsrolle jedem Klienten zugewiesen ist und daß zweite Mittel für jede Klientensystemverwaltungsrolle vorgesehen sind, die ausgebildet sind, um Zugriffsrechte für Nutzer, die einer jeweiligen Klientengruppe angehören, zu erzeugen, lesen, aktualisieren und zu löschen und die ferner ausgebildet sind, unter keinen Umständen Zugriff zu Zugriffsrechten freizugeben, die zu anderen Klientengruppen gehören.

6. Datenbank nach Anspruch 5, dadurch **gekennzeichnet**, daß ein Zugriffsmittel zum Steuern von Zugriffsrechten für die Datenbank für jeden Nutzer vorgesehen ist, wobei die Zugriffsrechte es einem gegebenen Nutzer ermöglichen, auf die Datenbank innerhalb von vorgegebenen temporären Zeitspannen zuzugreifen.

7. Datenbank nach Anspruch 6, **gekennzeichnet** durch Sicherheitsmittel, die in den Zugriffsmitteln enthalten sind, wobei die Sicherheitsmittel vorgesehen sind, um eine Computeridentität eines Nutzers aus der Liste der autorisierten Nutzer der Datenbank von Nutzerversuchen zu löschen, auf die Datenbank außerhalb der vorgegebenen temporären Zeitspannen, die dem Nutzer zugewiesen sind, zuzugreifen.

8. Datenbank nach Anspruch 7, **gekennzeichnet** durch Alarmmittel zum Errichten einer Alarmanzeige für einen Systemverwalter in Abhängigkeit von Nutzern, die versuchen, auf die Datenbank außerhalb der vorgegebenen temporären Zeitspannen, die dem Nutzer zugewiesen sind, zuzugreifen.

9. Verfahren für ein Computernetzwerk mit einem zentralen Verarbeitungsmittel einschließlich eines File-Servers, auf dem eine Datenbank gespeichert ist, einer Anzahl von Terminals, die mit dem Zentralprozessor kommunizieren können, wobei das Computernetzwerk ausgebildet ist, um einer Anzahl von Klienten zu dienen, wobei jeder Klient eine Anzahl von Nutzern aufweist, wobei das Verfahren Zugriffsrechte für jeden der Anzahl von Nutzern einstellt und die folgenden Schritte aufweist:
- Definieren von Zugriffsrechten auf die Datenbank für jeden Nutzer durch Zuweisen von Datenbankrollen,
- Zuweisen von zumindest einem ersten Nutzer an eine erste Systemverwaltungsrolle, die unbeschränkten Zugriff auf die Datenbank gibt, und
- Zuweisen von zumindest einem zweiten Nutzer an eine zweite Systemverwaltungsrolle, die beschränkten Zugriff auf Teile der Datenbank gibt, wobei
die zweite Verwaltungsrolle es einem Nutzer, der der zweiten Verwaltungsrolle zugewiesen ist, nicht erlaubt, Zugriffsrechte für die zweite Verwaltungsrolle zu erzeugen, zu lesen, zu aktualisieren oder zu löschen und wobei es eine Anzahl von zweiten Systemverwaltungsrollen gibt, wobei jede Rolle sich auf einen unterschiedlichen Teil der Datenbank bezieht und es einem Nutzer ermöglicht, der Zugriff dazu hat, Zugriffsrechte für jeden Nutzer mit Zugriff auf nur solche oder weniger Teile der Datenbank, auf die die gegebene zweite Verwaltungsrolle Zugriff hat, zu erzeugen, lesen, aktualisieren und zu löschen, dadurch **gekennzeichnet**, daß eine Klientensystemverwaltungsrolle jedem Klienten zugewiesen ist und daß jede Klientensystemverwaltungsrolle es einem dieser Rolle zugewiesenen Nutzer ermöglicht, Zugriffsrechte von Nutzern, die einer jeweiligen Klientengruppe angehören, zu erzeugen, zu lesen, zu aktualisieren und zu löschen, es aber diesem Nutzer nicht ermöglicht, Zugriffsrechte, die zu anderen Klientengruppen gehören, zu erzeugen, zu lesen, zu aktualisieren und zu löschen.

10. Verfahren nach Anspruch 9, dadurch **gekennzeichnet**, daß einem Nutzer der Zugriff auf die Datenbank nur innerhalb vorgegebener temporärer Zeitspannen ermöglicht wird.

11. Verfahren nach Anspruch 10, dadurch **gekennzeichnet**, daß, wenn ein Nutzer versucht, auf die Datenbank außerhalb der vorgegebenen temporären Zeitspanne, die dem Nutzer zugewiesen ist, zuzugreifen, die Computeridentität des Nutzers von der Liste der autorisierten Nutzer der Datenbank gelöscht wird.

12. Verfahren nach Anspruch 11, dadurch **gekennzeichnet**, daß eine Alarmanzeige, auf die durch einen Systemverwalter zugegriffen werden kann, vorgesehen ist, wann immer ein Nutzer versucht, auf die Datenbank außerhalb der vorgegebenen temporären Zeitspanne, die dem Nutzer zugewiesen ist, zuzugreifen.

## Revendications

1. Réseau d'ordinateurs comprenant un moyen formant processeur central, comportant un serveur de fichiers dans lequel une base de données est rangée en mémoire, plusieurs terminaux adaptés pour communiquer avec le processeur central, le réseau d'ordinateurs étant agencé pour desservir plusieurs clients, chaque client comprenant plusieurs utilisateurs, réseau dans lequel il est prévu un moyen d'accès pour commander des droits d'accès, à la base de données, pour chaque utilisateur, le moyen d'accès comprenant un premier moyen de mémoire dans lequel sont rangés plusieurs rôles de base de données, dont au moins deux sont des rôles de gestion système, chacun comportant des niveaux différents de droits d'accès à la base de données, un premier rôle de gestion système donnant un accès non limité à la base de données, un second rôle de gestion système donnant un accès limité à des parties de la base de données, un premier moyen pour permettre à un utilisateur ayant accès au premier rôle de gestion système de créer, lire, mettre à jour et supprimer des droits d'accès de n'importe quel utilisateur y compris un utilisateur auquel est affecté le premier rôle de gestion système, un second moyen pour permettre à un utilisateur ayant accès au second rôle de gestion système de créer, lire, mettre à jour et supprimer des droits d'accès de n'importe quel utilisateur ayant un accès uniquement aux parties de la base de données auxquelles le second rôle de gestion a accès ou à un moins grand nombre de ces parties, le second moyen étant agencé de façon à ne pas permettre à un utilisateur ayant accès au second rôle de gestion de créer, lire, mettre à jour ou supprimer des droits d'accès du second rôle de gestion, réseau dans lequel il existe plusieurs seconds rôles de gestion système, chaque rôle étant lié à une partie différente de la base de données, et dans lequel. il est prévu plusieurs seconds moyens, chaque second moyen permettant à un utilisateur ayant accès à un second rôle de gestion de système donné de créer, lire, mettre à jour et supprimer des droits d'accès de n'importe quel utilisateur ayant accès uniquement aux parties de la base de données auxquelles ledit second rôle de gestion de données à accès, caractérisé en ce qu'un rôle de gestion système de client est affecté à chaque client et en ce qu'un second moyen est prévu pour chaque rôle de gestion système de client en étant agencé pour créer, lire, mettre à jour et supprimer des droits d'accès d'utilisateurs appartenant à un groupe de clients respectif et agencé en outre pour ne donner aucun accès quel qu'il soit à des droits d'accès appartenant à d'autres groupes de clients.

2. Réseau d'ordinateurs suivant la revendication 1, caractérisé en ce qu'il est prévu un moyen d'accès pour commander des droits d'accès, à la base de données, pour chaque utilisateur, lesdits droits d'accès permettant à un utilisateur donné d'avoir accès à la base de données dans des périodes de temps préfixées, le moyen d'accès comprenant un moyen de surveillance agencé pour refuser à un utilisateur un accès à la base de données en dehors de la période de temps préfixée affectée à cet utilisateur.

3. Réseau d'ordinateurs tels que revendiqué à la revendication 2, caractérisé en ce que le moyen de surveillance est agencé, en réponse à la tentative d'un utilisateur d'avoir accès à la base de données en dehors de la période de temps préfixée affectée audit utilisateur, pour signaler l'identité d'ordinateur dudit utilisateur à un moyen de sécurité, le moyen de sécurité étant adapté, à la réception dudit signal, pour supprimer l'identité d'ordinateur de la liste d'utilisateurs autorisés de la base de données.

4. Réseau d'ordinateurs tels que revendiqué à la revendication 3, caractérisé en ce qu'il est prévu un moyen d'alarme agencé pour fournir un message d'alarme pour un gestionnaire de système, le moyen de sécurité étant adapté pour activer le moyen d'alarme à la réception d'un signal d'identité d'utilisateur d'ordinateur en provenance du moyen de surveillance.

5. Base de données, rangée en mémoire dans un serveur de fichiers, à laquelle ont accès plusieurs clients, chaque client comprenant plusieurs utilisateurs, base de données dans laquelle sont définis plusieurs rôles de base de données, au moins deux desdits rôles étant des rôles de gestion système ayant des niveaux différents de droits d'accès à la base de données, un premier rôle de gestion système donnant un accès non limité à la base de données, un second rôle de gestion système donnant un accès limité à des parties de la base de données, un premier moyen pour permettre à un utilisateur ayant accès au premier rôle de gestion système de créer, lire, mettre à jour et supprimer des droits d'accès de n'importe quel utilisateur y compris un utilisateur auquel est affecté le premier rôle de gestion système, et un second moyen pour permettre à un utilisateur ayant accès au second rôle de gestion système de créer, lire, mettre à jour et supprimer des droits d'accès de n'importe quel utilisateur ayant accès uniquement aux parties de la base de données auxquelles le second rôle de gestion a accès ou à un moins grand nombre de ces parties, ledit second moyen étant agencé de façon à ne pas permettre à un utilisateur ayant accès au second rôle de gestion de créer, lire, mettre à jour ou supprimer des droits d'accès du second rôle de gestion, base de données dans laquelle il est prévu plusieurs seconds rôles de gestion système, chaque rôle étant lié à une partie différente de la base de données, et dans laquelle il est prévu plusieurs seconds moyens, chaque second moyen permettant à un utilisateur ayant accès à un second rôle de gestion système donné de créer, lire, mettre à jour et supprimer des droits d'accès de n'importe quel utilisateur ayant accès uniquement aux parties de la base de données auxquelles ledit second rôle de gestion donné à accès ou à un moins grand nombre de ces parties, caractérisée en ce qu'un rôle de gestion système de client est affecté à chaque client et en ce qu'un second moyen est prévu pour chaque rôle de gestion système de client en étant agencé pour créer, lire, mettre à jour et supprimer des droits d'accès d'utilisateurs appartenant à un groupe de clients respectif et agencé en outre pour ne donner aucun accès quel qu'il soit à des droits d'accès appartenant à d'autres groupes de clients.

6. Base de données suivant la revendication 5, caractérisée en ce qu'il est prévu un moyen d'accès pour commander des droits d'accès à la base de données pour chaque utilisateur, lesdits droits d'accès permettant à un utilisateur donné d'avoir accès à la base de données dans des périodes de temps préfixées.

7. Base de données telle que revendiquée à la revendication 6, caractérisée par un moyen de sécurité, compris dans ledit moyen d'accès, le moyen de sécurité étant conçu pour supprimer une identité d'ordinateur d'utilisateur sur la liste d'utilisateurs autorisés de la base de données en réponse à une tentative dudit utilisateur d'avoir accès à la base de données en dehors de la période de temps préfixée affectée audit utilisateur. En réponse à une tentative du dit utilisateur. Dans en réponse à une de tentative.

8. Base de données telle que revendiquée à la revendication 7, caractérisée par un moyen d'alarme conçu pour mettre en drapeau une indication d'alarme à destination d'un gestionnaire système en réponse à une tentative d'un utilisateur d'avoir accès à la base de données en dehors de la période de temps préfixée affectés audit utilisateur.

9. Procédé pour réseau d'ordinateurs, comprenant un moyen formant processeur central comportant un serveur de fichiers dans lequel une base de données est rangée en mémoire, plusieurs terminaux adaptés pour communiquer avec le processeur central, le réseau d'ordinateurs étant agencé pour desservir plusieurs clients, chaque client comprenant plusieurs utilisateurs, le procédé fixant des droits d'accès pour chacun des multiples utilisateurs et comportant les opérations suivantes :
- définir des droits d'accès, à la base de données, pour chaque utilisateur, en affectant des rôles de base de données ;
- affecter à au moins un premier utilisateur un premier rôle de gestion système donnant un accès non limité à la base de données ; et
- affecter à au moins un second utilisateur- un second rôle de gestion de système donnant un accès limité à des parties de la base de données, selon lequel le second rôle de gestion ne permet pas à un utilisateur auquel a été affecté ledit second rôle de gestion de créer, lire, mettre à jour ou supprimer les droits d'accès du second rôle de gestion et selon lequel il existe plusieurs seconds rôles de gestion système, chaque rôle étant lié à une partie différente de la base de données et chacun permettant à un utilisateur, qui y a accès, de créer, lire, mettre à jour et supprimer des droits d'accès pour n'importe quel utilisateur ayant un accès uniquement aux parties de la base de données auxquelles ledit second rôle de gestion donné a accès ou à un moins grand nombre, de ces parties, caractérisé en ce qu'un rôle de gestion système de client est affecté à chaque client et en ce que chaque rôle de gestion système de client permet à un utilisateur auquel ce rôle a été affecté de créer, lire, mettre à jour et supprimer des droits d'accès d'utilisateurs appartenant à un groupe de clients respectif, mais ne permet pas audit utilisateur de créer, lire, mettre à jour et supprimer des droits d'accès appartenant à d'autres groupes de clients.

10. Procédé suivant la revendication 9, caractérisé en ce qu'il est permis à un utilisateur d'avoir accès à la base de données uniquement dans des périodes de temps préfixées.

11. Procédé tel que revendiqué à la revendication 10, caractérisé en ce que, lorsqu'un utilisateur tente d'avoir accès à la base de données en dehors de la période de temps préfixée affectée audit utilisateur, l'identité d'ordinateur dudit utilisateur est supprimée de la liste d'utilisateurs autorisés de la base de données.

12. Procédé tel que revendiqué à la revendication 11, caractérisé en ce qu'une indication d'alarme, à laquelle un gestionnaire de système peut avoir accès, est fournie chaque fois qu'un utilisateur tente d'avoir accès à la base de données en dehors de la période de temps préfixée affectée audit utilisateur.
